# EUROPEAN PATENT APPLICATION

(11) **EP 4 800 240 A1**
(43) Date of publication of application: **02.09.2026**
(21) Application number: 25223905.8
(22) Date of filing: 16.12.2025
(51) Int. Cl.: F03D 13/25, B63B 21/50, B63B 79/10, B63B 79/30, E02D 27/42, B63B 35/44

(54) **A UNIVERSAL-JOINT-TYPE CONNECTION DEVICE FOR CONNECTING AN OFFSHORE WIND TURBINE PLATFORM TO THE SEABED**

(30) Priority: 27.02.2025 CN 202510225449
(71) Applicant: SHANGHAI INVESTIGATION, DESIGN & RESEARCH INSTITUTE CO., LTD., Shanghai 200434 (CN)
(72) Inventor: DONG, Jing, Shanghai, 200434 (CN); ZHANG, Dailong, Shanghai, 200434 (CN); BAO, Caihong, Shanghai, 200434 (CN); CHEN, Pengfei, Shanghai, 200434 (CN); LIN, Yu, Shanghai, 200434 (CN); WU, Xinyi, Shanghai, 200434 (CN); NIE, Yan, Shanghai, 200434 (CN); FAN, Ke, Shanghai, 200434 (CN)
(74) Representative: Groth & Co. KB

(57) **Abstract**

The present invention belongs to the technical field of offshore power generation, and specifically discloses a universal-joint-type connection device for connecting an offshore wind turbine platform to the seabed. By installing a cross universal-joint-type connection structure at the bottom of the main body of a tension-type floating offshore wind turbine platform and using the cross universal-joint-type connection structure as the swing center, when encountering strong winds or waves, the platform can swing in response to the winds or waves and float under the action of buoyancy. Meanwhile, by connecting the floating platform to the seabed, the forces acting on the platform main body can be transmitted to the seabed through the universal joint, avoiding the torsion phenomenon that occurs when mooring cables are used, improving the connection stability between the platform main body and the seabed, providing effective support for wind power generation equipment, and enabling the wind turbine unit to maintain stable wind-facing operation.

## Description

### TECHNICAL FIELD

The present invention relates to the technical field of offshore power generation, and specifically relates to a universal-joint-type connection device for connecting an offshore wind turbine platform to the seabed.

### BACKGROUND

With the continuous increase in energy demand and the gradual depletion of onshore resources, people's attention has gradually shifted from onshore to offshore. Offshore resources have enormous energy reserves, especially in the deep and distant sea areas. Exploiting offshore energy is of great significance for energy structure adjustment and sustainable development.

Wind power generation equipment is a renewable energy facility used for wind power generation, which converts wind energy into electrical energy. Different from traditional wind power generation, offshore wind turbine units refer to a wind power generation system in which wind turbines are built on floating platforms on the water surface, and they are suitable for wind energy exploitation in deep-water areas. A conventional offshore wind turbine unit generally includes a floating platform composed of at least one vertical buoy and at least one extension arm connected to a periphery of the bottom of the buoy. The platform is made of steel structure or reinforced concrete structure, with a wind turbine tower and a nacelle connected to the upper part thereof, and the lower part thereof is connected to the anchoring structure on the seabed through a mooring cable system to adapt to changes in waves, tidal currents and wind forces in the marine environment.

However, in extreme sea conditions, for example, when the mooring cable is continuously impacted by waves, the dynamic forces exerted on it are likely to cause the mooring cable to twist, that is, the mooring cable is prone to bending, which reduces the stability of the connection between the platform and the anchoring structure, thereby seriously weakening its functionality as a connection structure, causing it to fail to provide effective support for the wind power generation equipment above the platform, and thus adversely affecting the operational safety and power generation efficiency of the entire offshore wind power generation system.

### SUMMARY OF THE INVENTION

Therefore, the present invention provides a universal-joint-type connection device for connecting an offshore wind turbine platform to the seabed to solve the problem that mooring cables cannot provide effective support for wind power generation equipment in the prior art.

Specifically, the present invention provides a universal-joint-type connection device for connecting an offshore wind turbine platform to the seabed that comprises a cross universal-joint-type connection structure installed at a bottom of a platform main body of a column-type floating wind turbine unit, the cross universal-joint-type connection structure serves as a swing center, and the platform main body is swingably installed on the seabed around the cross universal-joint-type connection structure.

Beneficial Effects: by installing the cross universal-joint-type connection structure at the bottom of the platform main body of the column-type floating wind turbine unit and using the cross universal-joint-type connection structure as the swing center, when encountering strong winds or waves, the platform main body can swing in response to the winds and waves and float under the action of buoyancy, so that the forces acting on the platform main body can be transmitted to the seabed, avoiding the torsion phenomenon that occurs when mooring cables are used, improving the connection stability between the platform main body and the seabed, providing effective support for wind power generation equipment, and enabling the wind turbine unit to maintain stable wind-facing operation. Meanwhile, the platform main body can automatically adjust its attitude according to changes in wind direction and waves, better adapting to changes in the marine environment. That is, in relatively harsh sea conditions, it can effectively capture wind energy, helping to alleviate the phenomenon that power generation efficiency is adversely affected by external environmental factors, and enhancing the reliability of power generation. In addition, by reducing the direct impact of winds and waves on the wind turbine unit, the deformation resistance of the floating platform can also be improved.

In an optional embodiment, the cross universal-joint-type connection structure comprises a seabed base and a universal joint assembly, wherein the seabed base is fixed on the seabed; the universal joint assembly includes a first shaft fixing part, a first shaft, a second shaft fixing part, and a second shaft, wherein the first shaft fixing part is installed on a top of the seabed base, the first shaft is installed in the first shaft fixing part, the second shaft fixing part is installed at the bottom of the platform main body, the second shaft is installed in the second shaft fixing part, and the second shaft fixing part is able to rotate around a central axis of the second shaft; wherein projections of the first shaft and the second shaft on a horizontal reference plane intersect each other.

Beneficial Effects: by adding the first shaft and the second shaft and arranging the projections of the first shaft and the second shaft on the horizontal reference plane to intersect each other, the first shaft fixing part installed on the top of the seabed base and the second shaft fixing part installed at the bottom of the platform main body can rotate relative to each other, and it is realized that the platform main body is able to rotate around the axis of the first shaft and/or around the axis of the second shaft, thereby avoiding circumferential torsion of the platform main body around its own axis, so that the forces acting on the platform main body are directly transmitted to the ground, that is, the torque acting on the platform main body is directly transmitted to the ground. Such an arrangement helps the platform main body make adaptive adjustments according to changes in wind direction and waves, improving the wind resistance and wave resistance of the platform main body, allowing it to maintain a relatively stable operating state even in complex marine environments, thereby making the power generation process more reliable.

In an optional embodiment, the cross universal-joint-type connection structure further comprises first shaft bearing compartments and second shaft bearing compartments, wherein the first shaft bearing compartments are arranged in pairs and symmetrically distributed at two ends of the first shaft along its axial direction; the second shaft bearing compartments are arranged in pairs and symmetrically distributed at two ends of the second shaft along its axial direction; wherein either end of the first shaft along its axial direction is inserted into one of the first shaft bearing compartments, and either end of the second shaft along its axial direction is inserted into one of the second shaft bearing compartments.

Beneficial Effects: by inserting the two ends of the first shaft arranged along its axial direction and the two ends of the second shaft arranged along its axial direction into the corresponding shaft bearing compartments, respectively, the support structure for each shaft can be enhanced, enabling it to more stably bear the forces and moments originated from the platform main body and the seabed base. Meanwhile, the symmetrical arrangement of the respective shaft bearing compartments ensures that the corresponding shafts are subjected to more uniform forces during rotation, thereby alleviating the phenomenon of stress concentration and fatigue damage caused by uneven force distribution.

In an optional embodiment, a bearing seat is installed in each shaft bearing compartment, and the bearing seat is used for installing a bearing for a corresponding shaft.

Beneficial Effects: by installing a bearing seat in each shaft bearing compartment and installing the corresponding bearing at the bearing seat, the load-bearing capacity of the bearing can be enhanced. Meanwhile, reliable support for the corresponding shaft is realized, ensuring that the bearing provides high rotational accuracy and stability for the shaft.

In an optional embodiment, each shaft bearing compartment is a watertight chamber.

Beneficial Effects: by setting each shaft bearing compartment as a watertight chamber, the infiltration of moisture into the bearing compartment is reduced, preventing contact between moisture and the metal structure inside the bearing compartment, reducing the risk of corrosion, avoiding bearing damage and mechanical failures caused by moisture erosion, extending the service life of the universal joint, and improving economic benefits.

In an optional embodiment, a plurality of sealing members are arranged at a bearing watertight opening of each shaft bearing compartment, wherein the plurality of sealing members are arranged at intervals along the axial direction of the corresponding shaft to form a plurality of gaps, the plurality of gaps are all used for arranging detection ends of pressure detection elements, the detection ends of the pressure detection elements are used for detecting pressure values at the locations where they are respectively located and converting the detected pressure values into pressure signals, and electrical connection ends of the pressure detection elements are electrically connected to a control terminal to transmit the pressure signals to the control terminal.

Beneficial Effects: since each shaft bearing compartment is configured as a watertight chamber, it needs to be sealed, for example, by arranging a plurality of sealing members at intervals along the axial direction of the corresponding shaft at the bearing watertight opening of each shaft bearing compartment, multiple lines of defense are formed, thereby effectively preventing moisture and other impurities from entering the bearing compartment, and thus improving the sealing performance. Due to the spaced-apart arrangement of every two adjacent sealing members along the axial direction of the corresponding shaft, a plurality of gaps are formed. By arranging the detection ends of pressure detection elements in each gap, each pressure detection element can detect the hydraulic pressure at the gap where it is located. By feeding back the measured hydraulic load data to the control terminal, multiple sets of hydraulic pressure differences between adjacent gaps can be formed. After comparing each set of hydraulic pressure difference with a preset hydraulic pressure difference threshold, it can be judged whether the watertightness of each bearing is normal, providing operation and maintenance personnel with more accurate decision-making basis. That is, by real-time monitoring and early warning of the hydraulic pressures in the gaps of each bearing, the watertightness for the bearing can be confirmed in real time, and then whether the bearing is abnormal during use can be judged. A stable sealing environment with a pressure monitoring mechanism is constructed, which helps to improve the operational stability of the entire universal joint and reduce downtime caused by malfunctions.

In an optional embodiment, a detection end of a stress detection element is installed on each bearing seat, wherein the detection end of the stress detection element is used for detecting a radial stress value of a corresponding bearing, and an electrical connection end of the stress detection element is electrically connected to a control terminal, the stress detection element is used for converting the detected radial stress value into a radial stress signal and transmitting the radial stress signal to the control terminal.

Beneficial Effects: by adding a radial stress detection element to monitor the radial load on the bearing in real time during operation, real-time data support is provided for operation and maintenance personnel. Abnormal states during bearing operation, such as excessive stress and stress fluctuations, can be detected in a timely manner, thereby warning potential failures early for operation and maintenance personnel, enabling them to make more accurate decisions in a timely manner, and preventing safety accidents caused by bearing damage.

In an optional embodiment, a fluid channel extending along the axial direction is formed inside each shaft, and the fluid channel is in communication with an oil outlet of an oil storage element through an oil delivery pipe.

Beneficial Effects: by forming a fluid channel extending along the axial direction inside each shaft and using an oil delivery pipe to communicate the fluid channel with the oil outlet of the oil storage element located at the platform main body, the lubricating oil stored in the oil storage element can be continuously and stably delivered to the inside of the shaft through the fluid channel, thereby reducing the downtime caused by insufficient lubrication, and the lubricating oil can be evenly distributed on the surface of the shaft, thereby improving the lubrication effect and reducing friction and wear generated during the operation of each shaft. Meanwhile, this design makes the addition of lubricating oil simpler and more convenient, reducing the cost and time for shaft maintenance.

In an optional embodiment, the cross universal-joint-type connection structure further comprises a mounting block used for integrally mounting the first shaft bearing compartments and the second shaft bearing compartments.

In an optional embodiment, an oil injection hole is formed in the mounting block, wherein the oil injection hole is in communication with both a fluid channel of the first shaft and a fluid channel of the second shaft.

### BRIEF DESCRIPTION OF THE DRAWINGS

To more clearly illustrate the technical solutions in the specific implementations of the present invention, the drawings that are needed for describing the specific implementations are briefly introduced below. Apparently, the drawings described below only represent some implementations of the present invention, and those skilled in the art can obtain other drawings from these drawings without creative efforts.
FIG. 1 is a front view schematic diagram of the universal-joint-type connection device provided by an embodiment of the present invention when installed at the bottom of an offshore wind turbine platform;
FIG. 2 is a front view schematic diagram of the universal-joint-type connection device for connecting an offshore wind turbine platform to the seabed provided by an embodiment of the present invention;
FIG. 3 is a side view schematic diagram of the universal-joint-type connection device for connecting an offshore wind turbine platform to the seabed provided by an embodiment of the present invention;
FIG. 4 is a front view schematic diagram of a shaft bearing compartment in the universal-joint-type connection device for connecting an offshore wind turbine platform to the seabed provided by an embodiment of the present invention;
FIG. 5 is a perspective view schematic diagram of the universal joint assembly in the universal-joint-type connection device for connecting an offshore wind turbine platform to the seabed provided by an embodiment of the present invention.

### Reference numerals:

1, platform main body; 11, floating body; 12, connection body;
2, cross universal-joint-type connection structure; 21, seabed base; 22, universal joint assembly; 221, first shaft fixing part; 222, first shaft; 223, second shaft fixing part; 224, second shaft; 225, first shaft bearing compartment; 226, second shaft bearing compartment; 227, bearing seat; 228, bearing; 229, sealing member; 231, mounting block; 232, oil injection hole;
31, pressure detection element;
41, fluid channel; 42, oil storage element; 43, oil delivery pipe;
5, pile foundation;
6, oil-water separation device;
K, sea surface baseline; P, seabed baseline; Q, anti-landfill lifting section.

### DETAILED DESCRIPTION

The technical solutions of the present invention will be clearly and completely described below with reference to the accompanying drawings, and apparently, the described embodiments only represent part of the embodiments of the present invention, not all of them. Based on the embodiments described in the present invention, all other embodiments obtainable by those skilled in the art without creative work fall within the scope of protection of the present invention.

In the description of the present invention, it should be noted that the terms such as "center", "upper", "lower", "left", "right", "vertical", "horizontal", "inside", "outside" indicate orientations or positional relationships based on those shown in the drawings, and are only for convenience of describing the present invention and simplifying the description, rather than indicating or implying that the device or element referred to must have a specific orientation, or must be constructed and operated in a specific orientation. Therefore, they should not be construed as limiting the present invention. Additionally, terms "first", "second", and "third" are used for descriptive purposes only and should not be construed as indicating or implying relative importance.

In the description of the present invention, it should be noted that, unless otherwise clearly specified and defined, the terms "installation", "connect with" and "connect to" should be understood in a broad sense. For example, they may refer to a fixed connection, a detachable connection, or an integral connection; they may refer to a mechanical connection or an electrical connection; they may be directly connected or indirectly connected through an intermediate medium; they may be an internal communication between two elements. Those of ordinary skill in the art can understand the specific meanings of the above terms in the present invention according to specific circumstances.

In addition, the technical features involved in the different embodiments of the present invention described below can be combined with each other as long as there is no conflict between them.

Different from traditional wind power generation, floating wind turbine units refer to a wind power generation system in which wind turbines are built on floating platforms on the water surface, and they are suitable for wind energy exploitation in deep-water areas.

A conventional floating wind turbine unit generally includes a floating platform composed of at least one vertical buoy and at least one extension arm connected to a periphery of the bottom of the buoy. The platform is made of steel structure or reinforced concrete structure, with a wind turbine tower and a nacelle connected to the upper part thereof, and the lower part thereof is connected to the anchoring structure on the seabed through a mooring cable system to adapt to changes in waves, tidal currents and wind forces in the marine environment.

However, in extreme sea conditions, for example, when the mooring cable is continuously impacted by waves, the dynamic forces exerted on it are likely to cause the mooring cable to bend or even twist, which reduces the stability of the connection between the platform and the anchoring structure, seriously weakening its functionality as a connection structure, causing it to fail to provide effective support for the wind power generation equipment above the platform, and thus adversely affecting the operational safety and power generation efficiency of the entire offshore wind power generation system.

To this end, the present application configures the bottom of the platform main body to extend below the sea surface and toward the seabed, and at the same time, a cross universal-joint-type connection structure is added at the bottom of the platform main body, allowing the bottom of the platform main body to swing around the cross universal-joint-type connection structure, so that the forces acting on the platform main body of the floating platform wind turbine unit in extreme sea conditions such as strong winds or waves can be transmitted to the seabed through the cross universal-joint-type connection structure, avoiding the torsion phenomenon that occurs when mooring cables are used, thereby improving the connection stability between the platform main body and the seabed and providing effective support for wind power generation equipment.

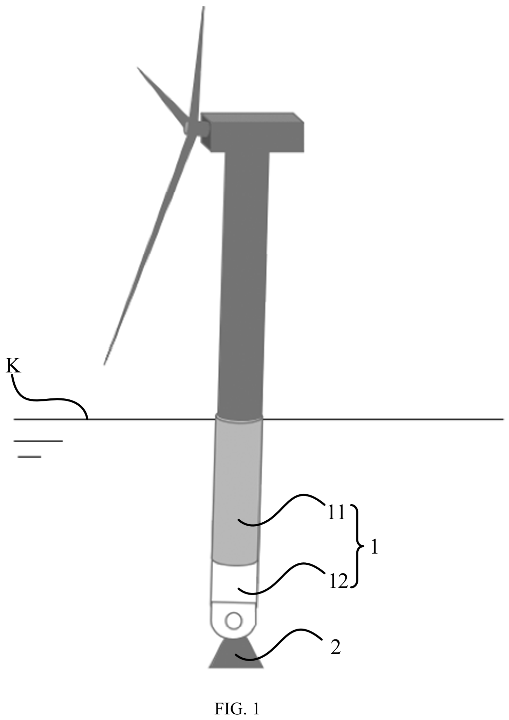

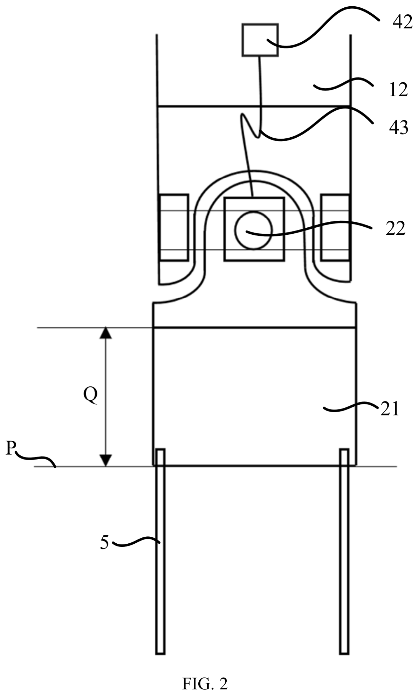

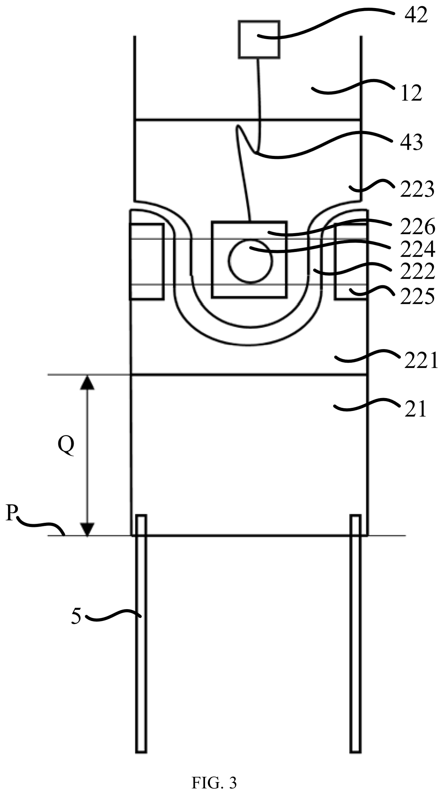

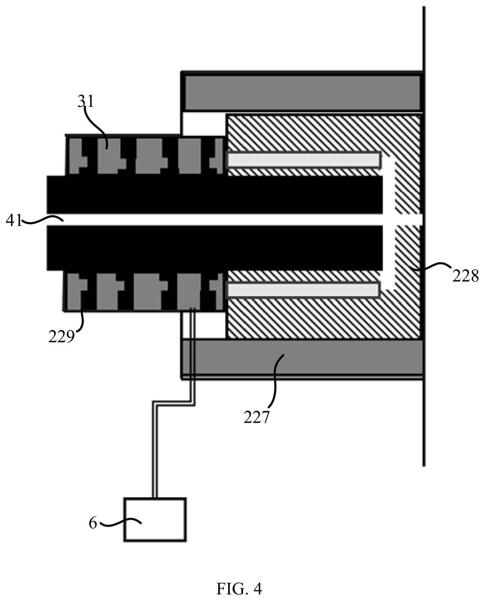

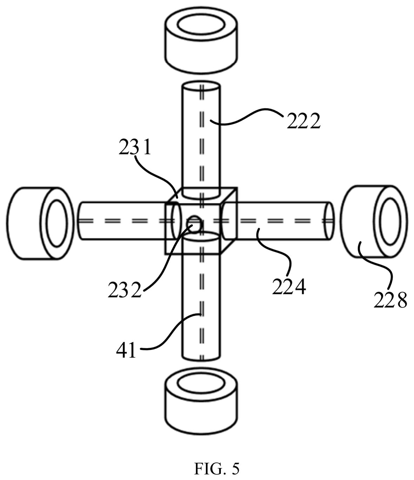

Referring to FIGS. 1 to 5, FIG. 1 shows a front view schematic diagram of the universal-joint-type connection device for connecting an offshore wind turbine platform to the seabed provided by an embodiment of the present application; FIG. 2 shows a front view schematic diagram of the cross universal-joint-type connection structure in the universal-joint-type connection device for connecting an offshore wind turbine platform to the seabed provided by an embodiment of the present application after installation; FIG. 3 shows a side view schematic diagram of the cross universal-joint-type connection structure in the universal-joint-type connection device for connecting an offshore wind turbine platform to the seabed provided by an embodiment of the present application after installation; FIG. 4 shows a front view schematic diagram of a shaft bearing compartment in the universal-joint-type connection device for connecting an offshore wind turbine platform to the seabed provided by an embodiment of the present application; FIG. 5 shows a perspective view schematic diagram of the universal joint assembly in the universal-joint-type connection device for connecting an offshore wind turbine platform to the seabed provided by an embodiment of the present application. Wherein, in the figures, K is the sea surface baseline; P is the seabed baseline; Q is the anti-landfill lifting section.

The embodiments of the present invention will be described below with reference to FIGS. 1 to 5.

According to an embodiment of the present invention, a universal-joint-type connection device for connecting an offshore wind turbine platform to the seabed is provided. As shown in FIG. 1, the universal-joint-type connection device for connecting an offshore wind turbine platform to the seabed comprises a cross universal-joint-type connection structure 2 installed at a bottom of a platform main body 1 of a column-type floating wind turbine unit, wherein the cross universal-joint-type connection structure 2 serves as a swing center, and the cross universal-joint-type connection structure 2 is swingably installed on the seabed.

With such an arrangement, by installing the cross universal-joint-type connection structure 2 at the bottom of the platform main body 1 and using the cross universal-joint-type connection structure 2 as the swing center, when encountering strong winds or waves, the platform main body 1 swings around the cross universal-joint-type connection structure 2, so that the forces acting on the platform main body 1 can be transmitted to the seabed, avoiding the torsion phenomenon that occurs when mooring cables are used, thereby improving the connection stability between the platform main body 1 and the seabed, providing effective support for wind power generation equipment, and enabling the wind turbine unit to maintain stable wind-facing operation.

Meanwhile, the platform main body 1 can automatically adjust its attitude according to changes in wind direction and waves, better adapting to changes in the marine environment. That is, in relatively harsh hydrological conditions, it can effectively capture wind energy, helping to alleviate the phenomenon that power generation efficiency is adversely affected by external environmental factors and enhancing the reliability of power generation.

In addition, by reducing the impact of winds and waves on the wind turbine unit, the anti-overturning ability of the floating platform is improved.

In an embodiment, as shown in FIGS. 2 and 3, the cross universal-joint-type connection structure 2 comprises a seabed base 21 and a universal joint assembly 22, wherein the seabed base 21 is fixed on the seabed; the universal joint assembly 22 includes a first shaft fixing part 221, a first shaft 222, a second shaft fixing part 223, and a second shaft 224, wherein the first shaft fixing part 221 is installed on a top of the seabed base 21, the first shaft 222 is installed in the first shaft fixing part 221, the second shaft fixing part 223 is installed at the bottom of the platform main body 1, the second shaft 224 is installed in the second shaft fixing part 223, and the second shaft fixing part 223 is able to rotate around a central axis of the second shaft 224; wherein projections of the first shaft 222 and the second shaft 224 on a horizontal reference plane intersect each other.

That is, by adding the first shaft 222 and the second shaft 224 and arranging the projections of the first shaft 222 and the second shaft 224 on the horizontal reference plane to intersect each other, the first shaft fixing part 221 installed on the top of the seabed base 21 and the second shaft fixing part 223 installed at the bottom of the platform main body 1 can rotate relative to each other, and it is realized that the platform main body 1 is able to rotate around the axis of the first shaft and/or around the axis of the second shaft, thereby avoiding circumferential torsion of the platform main body 1 around its own axis, so that the torque acting on the platform main body 1 is directly transmitted to the ground.

Such an arrangement helps the platform main body 1 make adaptive adjustments according to changes in wind direction and waves, improving the wind resistance and wave resistance of the floating platform, allowing it to maintain a relatively stable operating state even in complex marine environments, thereby making the power generation process more reliable.

Preferably, the projections of the first shaft 222 and the second shaft 224 on the horizontal reference plane are arranged perpendicular to each other.

It should be noted that, in this embodiment, as shown in FIGS. 2 and 3, the seabed base 21 is fixed on the seabed by means of pile foundations 5, in which P is the seabed baseline, and Q is the anti-landfill lifting section, that is, the height difference between the first shaft fixing part 221 and the seabed baseline is elevated by the seabed base 21, which is intended to prevent sediment filling and burying of the universal joint assembly 22 caused by seabed movement. The lifting height is determined by the specific construction environment.

It should be noted that in order to improve the integration degree of the cross universal-joint-type connection structure 2 of the present application, the first shaft 222 and the second shaft 224 are integrally installed on a mounting block 231, and the axis of the first shaft and the axis of the second shaft are located in the same horizontal reference plane, at this time, the second shaft fixing part 223 rotates around the second shaft 224, thereby realizing the rotation of the second shaft fixing part 223 relative to the first shaft fixing part 221.

Preferably, as shown in FIG. 5, the mounting block 231 is centrally arranged on the first shaft 222 and at the same time centrally arranged on the second shaft 224.

In an embodiment, as shown in FIGS. 2 and 3, the cross universal-joint-type connection structure 2 further comprises first shaft bearing compartments 225 and second shaft bearing compartments 226, wherein the first shaft bearing compartments 225 are arranged in pairs and symmetrically distributed at two ends of the first shaft 222 along its axial direction; the second shaft bearing compartments 226 are arranged in pairs and symmetrically distributed at two ends of the second shaft 224 along its axial direction; wherein either end of the first shaft 222 along its axial direction is inserted into one of the first shaft bearing compartments 225, and either end of the second shaft 224 along its axial direction is inserted into one of the second shaft bearing compartments 226.

With such an arrangement, by inserting the two ends of the first shaft 222 arranged along its axial direction and the two ends of the second shaft 224 arranged along its axial direction into the corresponding shaft bearing compartments, respectively, the support structure for each shaft can be enhanced, enabling it to more stably bear the forces and moments originated from the platform main body 1 and the seabed base 21.

Meanwhile, the symmetrical arrangement of the respective shaft bearing compartments ensures that the corresponding shafts are subjected to more uniform forces during rotation, thereby alleviating the phenomenon of stress concentration and fatigue damage caused by uneven force distribution.

In an embodiment, as shown in FIG. 4, a bearing seat 227 is installed in each shaft bearing compartment, and the bearing seat 227 is used for installing a bearing for a corresponding shaft.

With such an arrangement, by installing a bearing seat 227 in each shaft bearing compartment and mounting the corresponding bearing 228 at the bearing seat 227, the load-bearing capacity of the bearing 228 can be enhanced. Meanwhile, reliable support for the corresponding shaft is realized, ensuring that the bearing 228 provides high rotational accuracy and stability for the shaft.

It should be noted that the shape of the bearing seat 227 is not specifically limited. It can be composed of at least one shape selected from square and circular ring, as long as it is provided with a cavity for accommodating the bearing 228 therein.

It should be noted that the bearing 228 is preferably a cylindrical roller bearing. At this time, each bearing 228 is composed of an inner ring, an outer ring and cylindrical roller elements, which mainly bear lateral (i.e., in the vertical direction as shown in FIG. 4) pressure.

Therefore, a detection end of a stress detection element is installed on each bearing seat 227, wherein the detection end of the stress detection element is used for detecting a radial stress value of a corresponding bearing 228, and an electrical connection end of the stress detection element is electrically connected to a control terminal, the stress detection element is used for converting the detected radial stress value into a radial stress signal and transmitting the radial stress signal to the control terminal so as to judge whether the tension system is working normally.

With such an arrangement, by adding a radial stress detection element to monitor the radial load on the bearing 228 in real time during operation, real-time data support is provided for operation and maintenance personnel. Abnormal states during operation of the bearing 228, such as excessive stress and stress fluctuations, can be detected in a timely manner, thereby warning potential failures early for operation and maintenance personnel, enabling them to make more accurate decisions in a timely manner, and preventing safety accidents caused by damage to the bearing 228.

Specifically, the detection end of the stress detection element is located on the inner wall of the cavity of the bearing seat 227 and abuts against the outer wall of the outer ring of the bearing 228.

In an embodiment, each shaft bearing compartment is selected as a watertight chamber.

With such an arrangement, by setting each shaft bearing compartment as a watertight chamber, the infiltration of moisture into the bearing compartment is reduced, preventing contact between moisture and the metal structure inside the bearing compartment, reducing the risk of corrosion, avoiding damage to the bearing 228 and mechanical failures caused by moisture erosion, extending the service life of the universal joint, and improving economic benefits.

Further, a plurality of sealing members 229 are arranged at a bearing watertight opening of each shaft bearing compartment, wherein the plurality of sealing members 229 are arranged at intervals along the axial direction of the corresponding shaft to form a plurality of gaps, the plurality of gaps are all used for arranging detection ends of pressure detection elements 31, the detection ends of the pressure detection elements 31 are used for detecting pressure values at the locations where they are respectively located and converting the detected pressure values into pressure signals; and the universal-joint-type connection device for connecting an offshore wind turbine platform to the seabed further comprises a control terminal electrically connected to electrical connection ends of the pressure detection elements 31. The control terminal is used for receiving the pressure signals fed back by the pressure detection elements 31 and converting the received pressure signals into pressure values, wherein a pressure difference threshold is preset in the control terminal.

With such an arrangement, since each shaft bearing compartment is configured as a watertight chamber, it needs to be sealed, for example, by arranging a plurality of sealing members 229 at intervals along the axial direction of the corresponding shaft at the bearing watertight opening of each shaft bearing compartment, multiple lines of defense are formed, thereby effectively preventing moisture and other impurities from entering the bearing compartment, and thus improving the sealing performance.

Due to the spaced-apart arrangement of every two adjacent sealing members 229 along the axial direction of the corresponding shaft, a plurality of gaps are formed. By arranging the detection ends of pressure detection elements 31 in each gap, each pressure detection element 31 can monitor the hydraulic pressure at the gap where it is located in real time. By feeding back the measured hydraulic load data to the control terminal, multiple sets of hydraulic pressure differences between adjacent gaps can be formed. After comparing each set of hydraulic pressure difference with the preset hydraulic pressure difference threshold, it can be judged whether the watertightness of each bearing 228 is normal, providing operation and maintenance personnel with more accurate decision-making basis.

That is, by real-time monitoring and early warning of the hydraulic pressures in the gaps of each bearing 228, the watertightness for the bearing 228 can be confirmed in real time, and then whether the bearing 228 is abnormal during use can be judged. A stable sealing environment with a pressure monitoring mechanism is constructed, which helps to improve the operational stability of the entire universal joint and reduce downtime caused by malfunctions.

In addition, in order to improve the efficiency of reuse of lubricating oil, it is necessary to recover the lubricating oil after lubrication. At this time, an oil-water separation device 6 is added, and pipes are used to connect the inlet of the oil-water separation device 6 with each shaft bearing compartment for separating the mixture of water and oil. The separated water is discharged through a sewage discharge structure such as a sewage discharge pipe, and meanwhile the separated lubricating oil is guided into an oil storage element 42 for storage and recovery for subsequent reuse.

Preferably, the control terminal is selected as a signal acquisition instrument for collecting pressure signals and stress signals and converting them into corresponding pressure values and stress values for analysis by operation and maintenance personnel. For example, the water tightness for the bearing 228 is judged according to the hydraulic pressure difference corresponding to adjacent gaps thereof.

It should be noted that the hydraulic pressure difference mentioned in the above embodiment may be the hydraulic pressure difference measured by the detection ends of two adjacent pressure detection elements 31, or the hydraulic pressure difference measured by the detection ends of two spaced-apart pressure detection elements 31.

In an embodiment, a fluid channel 41 extending along the axial direction is formed inside each shaft; the universal-joint-type connection device for connecting an offshore wind turbine platform to the seabed further comprises an oil storage element 42 for storing lubricating oil. The oil storage element 42 is installed at the platform main body 1, and the fluid channel 41 is in communication with an oil outlet of the oil storage element 42 through an oil delivery pipe 43.

With such an arrangement, by forming a fluid channel 41 extending along the axial direction inside each shaft and using an oil delivery pipe 43 to communicate the fluid channel 41 with the oil outlet of the oil storage element 42 located at the platform main body 1, the lubricating oil stored in the oil storage element 42 can be continuously and stably delivered to the inside of the shaft through the fluid channel 41, then the lubricating oil flows to the outer wall surface of the shaft along the gap between the shaft and the bearing, and is evenly distributed on the surface of the shaft, thereby improving the lubrication effect and reducing friction and wear generated during the operation of each shaft.

Meanwhile, this design makes the addition of lubricating oil simpler and more convenient, reducing the cost and time for shaft maintenance.

In addition, lubricating oil has a certain viscosity and thus a certain watertight effect.

Preferably, the oil storage element 42 is preferably a gravity oil tank.

As shown in FIG. 5, since the first shaft 222 and the second shaft 224 are integrally installed at the mounting block 231, and the mounting block 231 is centrally arranged on the first shaft 222 along the axial direction of the first shaft and at the same time centrally arranged on the second shaft 224 along the axial direction of the second shaft, preferably, an oil injection hole 232 is formed in the mounting block 231, wherein the oil injection hole 232 is in communication with both a fluid channel 41 of the first shaft 222 and a fluid channel 41 of the second shaft 224.

With such an arrangement, the flow path of the lubricating oil can be improved, allowing the lubricating oil to flow quickly and evenly into the first shaft 222 and the second shaft 224. Compared with a way of the lubricating oil flowing into one of the first shaft 222 and the second shaft 224 firstly and then flowing into the other, the lubrication path of the lubricating oil is greatly shortened, and the lubrication efficiency is improved.

It should be noted that, in this embodiment, the second shaft fixing part 223 is provided with a pair of spaced-apart first connection holes, and the first shaft fixing part 221 is provided with a pair of spaced-apart second connection holes. A projection of the line connecting the pair of first connection holes intersects a projection of the line connecting the pair of second connection holes on a horizontal reference plane. At this time, the first connection holes are adapted to the arc-shaped outer wall surface of the second shaft 224, and the second connection holes are adapted to the arc-shaped outer wall surface of the first shaft 222.

During installation, the first shaft 222 is inserted into the pair of second connection holes along its axial direction, and the second shaft 224 is inserted into the pair of first connection holes along its axial direction, thereby realizing the fixation between the first shaft fixing part 221 and the second shaft fixing part 223.

It should be noted that the horizontal reference plane is defined as a reference plane where the horizontal direction shown in FIG. 1 is located.

After each shaft is installed, the axis of the first shaft and the axis of the second shaft are both parallel to the horizontal reference plane.

Preferably, the axis of the first shaft is perpendicular to the axis of the second shaft.

Apparently, the above embodiments are only examples for clear description, and are not intended to limit the implementation ways. For those of ordinary skill in the art, other changes or modifications in different forms can be made on the basis of the above description. It is unnecessary and impossible to exhaustively list all the implementation ways herein. However, any obvious changes or modifications derived from this are still within the protection scope of the present invention.

## Claims

1. A universal-joint-type connection device for connecting an offshore wind turbine platform to the seabed, **characterized by** comprising:
a cross universal-joint-type connection structure (2) installed at a bottom of a platform main body (1) of a column-type floating wind turbine unit, wherein the cross universal-joint-type connection structure (2) serves as a swing center, and the cross universal-joint-type connection structure (2) is swingably installed on the seabed.

2. The universal-joint-type connection device for connecting an offshore wind turbine platform to the seabed according to claim 1, **characterized in that** the cross universal-joint-type connection structure (2) comprises:
a seabed base (21) fixed on the seabed;
a universal joint assembly (22) including a first shaft fixing part (221), a first shaft (222), a second shaft fixing part (223), and a second shaft (224), wherein the first shaft fixing part (221) is installed on a top of the seabed base (21), the first shaft (222) is installed in the first shaft fixing part (221), the second shaft fixing part (223) is installed at the bottom of the platform main body (1), the second shaft (224) is installed in the second shaft fixing part (223), and the second shaft fixing part (223) is able to rotate around a central axis of the second shaft (224);
wherein projections of the first shaft (222) and the second shaft (224) on a horizontal reference plane intersect each other.

3. The universal-joint-type connection device for connecting an offshore wind turbine platform to the seabed according to claim 2, **characterized in that** the cross universal-joint-type connection structure (2) further comprises:
first shaft bearing compartments (225) arranged in pairs and symmetrically distributed at two ends of the first shaft (222) along its axial direction;
second shaft bearing compartments (226) arranged in pairs and symmetrically distributed at two ends of the second shaft (224) along its axial direction;
wherein either end of the first shaft (222) along its axial direction is inserted into one of the first shaft bearing compartments (225), and either end of the second shaft (224) along its axial direction is inserted into one of the second shaft bearing compartments (226).

4. The universal-joint-type connection device for connecting an offshore wind turbine platform to the seabed according to claim 3, **characterized in that**
a bearing seat (227) is installed in each shaft bearing compartment, and the bearing seat (227) is used for installing a bearing (228) for a corresponding shaft.

5. The universal-joint-type connection device for connecting an offshore wind turbine platform to the seabed according to claim 4, **characterized in that**
each shaft bearing compartment is a watertight chamber.

6. The universal-joint-type connection device for connecting an offshore wind turbine platform to the seabed according to claim 5, **characterized in that**
a plurality of sealing members (229) are arranged at a bearing watertight opening of each shaft bearing compartment, wherein the plurality of sealing members (229) are arranged at intervals along the axial direction of the corresponding shaft to form a plurality of gaps, the plurality of gaps are all used for arranging detection ends of pressure detection elements (31), the detection ends of the pressure detection elements (31) are used for detecting pressure values at the locations where they are respectively located and converting the detected pressure values into pressure signals, and electrical connection ends of the pressure detection elements (31) are electrically connected to a control terminal to transmit the pressure signals to the control terminal.

7. The universal-joint-type connection device for connecting an offshore wind turbine platform to the seabed according to any one of claims 1-6, **characterized in that**
a fluid channel (41) extending along the axial direction is formed inside each shaft, and the fluid channel (41) is in communication with an oil outlet of an oil storage element (42) through an oil delivery pipe (43).

8. The universal-joint-type connection device for connecting an offshore wind turbine platform to the seabed according to any one of claims 3-6, **characterized in that**
a detection end of a stress detection element is installed on each bearing seat (227), wherein the detection end of the stress detection element is used for detecting a radial stress value of a corresponding bearing (228), and an electrical connection end of the stress detection element is electrically connected to a control terminal, the stress detection element is used for converting the detected radial stress value into a radial stress signal and transmitting the radial stress signal to the control terminal.

9. The universal-joint-type connection device for connecting an offshore wind turbine platform to the seabed according to claim 8, **characterized in that** the cross universal-joint-type connection structure (2) further comprises:
a mounting block (231) used for integrally mounting the first shaft bearing compartments (225) and the second shaft bearing compartments (226).

10. The universal-joint-type connection device for connecting an offshore wind turbine platform to the seabed according to claim 9, **characterized in that**
an oil injection hole (232) is formed in the mounting block (231), wherein the oil injection hole (232) is in communication with both a fluid channel (41) of the first shaft (222) and a fluid channel (41) of the second shaft (224).
